# EUROPÄISCHE PATENTANMELDUNG

(11) **EP 0 918 425 A2**
(43) Veröffentlichungstag der Anmeldung: **26.05.1999**
(21) Anmeldenummer: 98440256.0
(22) Anmeldetag: 13.11.1998
(51) Int. Cl.: H04M 1/00

(54) **Softwaregesteuertes Teilnehmerendgerät, Server zum Bereitstellen eines Steuerprogrammes und Verfahren zum Betrieb des Softwaregesteuerten Teilnehmerendgerätes**

(30) Priorität: 19.11.1997 DE 19751318
(71) Anmelder: ALCATEL, 75008 Paris (FR)
(72) Erfinder: Apel, Ulrich, 71256 Ditzingen (DE)
(74) Vertreter: Brose, Gerhard, Dipl.-Ing.

(57) **Zusammenfassung**

Das Telekommunikationsendgerät (TER) besitzt einen Prozessor (CPU), der durch Ausführung eines in einem Speicher (MEM) enthaltenem Programm das Endgerät steuert. Das Programm wird aus einem Telekommunikationsnetz (NET) in den Speicher (MEM) geladen.

Erfindungsgemäß handelt es sich bei dem Programm um ein Programmpaket, das aus Programmodulen besteht, bei dem jedes Programmodul zur Ausführung eines Leistungsmerkmales des Telekommunkationsendgerätes (TER) geeignet ist. Die Programmodule sind einzeln ladbar. Das Endgerät enthält eine Konfigurationstabelle, in der jedes aktuell geladene Programmodul vermerkt ist. Bei Inbetriebnahme des Endgerätes wird nur ein Basissatz von Programmodulen in den Speicher geladen. Soll ein Leistungsmerkmal ausgeführt werden, dessen Programmodul nicht geladen ist, so wird es dynamisch zur Laufzeit nachgeladen. Dadurch kann das Endgerät flexibel an die aktuelle Nutzungssituation angepaßt werden.

## Beschreibung

Die Erfindung betrifft ein Telekommunikationsendgerät nach dem Oberbegriff des Anspruchs 1, einen Server für ein Telekommunikationsnetz nach dem Oberbegriff des Anspruchs 10 und ein Verfahren zum Betrieb eines Telekommunikationsendgerätes nach dem Oberbegriff des Anspruchs 13.

Aus der australischen Patentschrift AU-B-77395/91 ist ein an ein Telekommunikationsnetz anschließbares Telekommunikationsendgerät bekannt, das von einem Mikroprozessor gesteuert ist und einen Speicher besitzt, in dem ein Softwareprogramm zur Steuerung des Endgerätes gespeichert ist. Weiter besitzt das Endgerät einen Festwertspeicher mit einer Download-Software, mittels der das Softwareprogramm aus dem Telekommunikationsnetz in den Speicher geladen werden kann. Bevorzugt hat das Endgerät zwei getrennte Speicher, von denen einer das Softwareprogramm enthält, das aktuell ausgeführt wird, und in den anderen gleichzeitig ein neues Softwareprogramm geladen wird. Dadurch wird der Betrieb während des Ladens nicht beeinträchtigt.

Bei dem beschriebenen Endgerät besteht der Nachteil, daß das Softwareprogramm nur als ganzes in den Speicher geladen werden kann und daß das Softwareprogramm auch Funktionen und Leistungsmerkmale enthält, die aktuell nicht benötigt werden.

Die Aufgabe der Erfindung besteht darin, ein softwaregesteuertes Telekommunikationsendgerät anzugeben, das flexibel an die aktuelle Nutzungssituation angepaßt werden kann. Eine weitere Aufgabe der Erfindung ist es, einen Server für ein Telekommunikationsnetz anzugeben, der die Steuerungssoftware für den Betrieb eines solchen softwaregesteuerten Telekommunikationsendgerätes zur Verfügung stellt. Eine weitere Aufgabe ist es, ein Verfahren zum Betrieb des Telekommunikationsendgerätes anzugeben.

Die Aufgabe wird hinsichtlich des Endgerätes gelöst durch die Merkmale des Anspruchs 1, hinsichtlich des Servers durch die Merkmale des Anspruchs 10 und hinsichtlich des Verfahrens durch die Merkmale des Anspruchs 13. Vorteilhafte Ausgestaltungen sind den abhängigen Ansprüchen zu entnehmen.

Die Erfindung hat den Vorteil, daß das Endgerät bei gleichem Leistungsumfang mit einem kleineren Speicher auskommt als bekannte softwaregesteuerte Endgeräte. Ein weiterer Vorteil ist, daß das zur Steuerung des Endgerätes vorgesehene Programm oder einzelne Programmodule leicht aktualisiert werden können. Ein weiterer Vorteil ist, daß die Ladezeit für ein dynamisches Laden des Programmes insbesondere bei Inbetriebnahme des Endgerätes verringert ist.

Im folgenden wird die Erfindung anhand der Zeichnungen 1-4 in mehreren Ausführungsbeispielen erläutert. Es zeigen:
- Figur 1: ein an ein Telekommunikationsnetz angeschlossenes erfindungsgemäßes Endgerät,
- Figur 2: ein Blockschaltbild eines erfindungsgemäßen Endgerätes,
- Figur 3: ein Beispiel für die Speicherbelegung in einem erfindungsgemäßen Endgerät,
- Figur 4: ein Flußdiagramm eines erfindungsgemäßen Verfahrens und
- Figur 5: eine vorteilhafte Weiterbildung des Endgerätes.

Ein Grundgedanke der Erfindung besteht darin, ein softwaregesteuertes Telekommunikationsendgerät vorzusehen, und das Programm zur Steuerung des Endgerätes nicht als ganzes über das Telekommunikationsnetz zu laden sondern in Programmodulen. Dabei sollen nur die aktuell benötigten Programmodule in das Endgerät geladen werden. Werden im Betrieb des Endgerätes weitere, zusätzliche Leistungsmerkmale benötigt, so werden die hierfür notwendigen Programmodule on-line nachgeladen und automatisch konfiguriert. Damit handelt es sich bei dem Programm um eine dynamisch zur Laufzeit konfigurierbare Software.

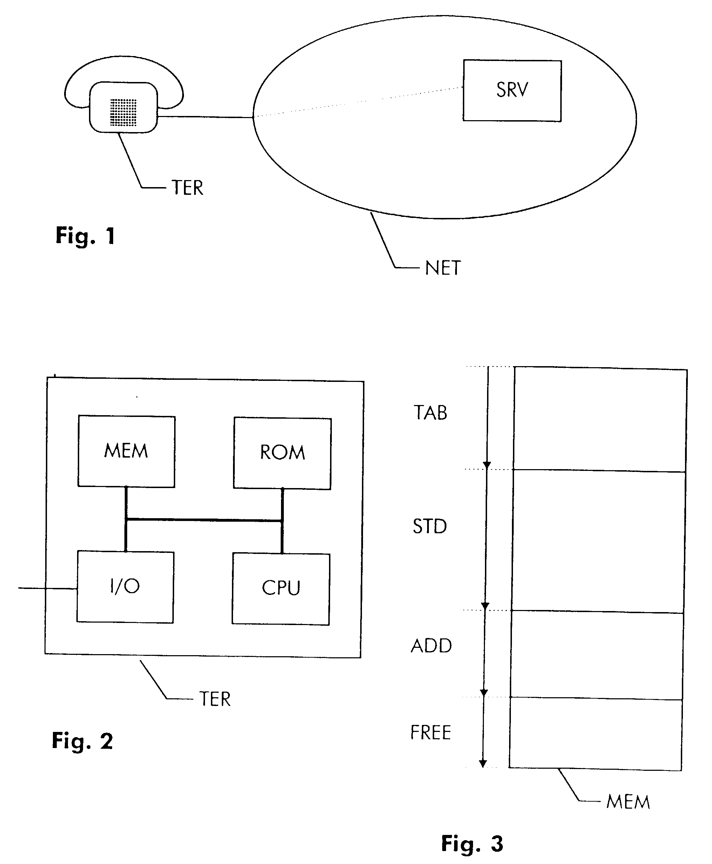

Ein erfindungsgemäßes Telekommunikationsendgerät TER ist in einem ersten Ausführungsbeispiel in Figur 1 gezeigt. Das Endgerät TER ist an ein Telekommunikationsnetz NET angeschlossen. Das Telekommunikationsnetz enthält einen zentralen Server SRV. Von dem zentralen Server SRV können softwaregesteuerte Endgeräte ein Steuerprogramm laden. Das Steuerprogramm ist ein Programmpaket und besteht aus mehreren Programmodulen, die einzeln geladen werden können. Jedes Leistungsmerkmal des Endgerätes wird durch ein separates Programmodul realisiert. Bei Inbetriebnahme des Endgerätes TER lädt dieses von dem Server SRV einen Basissatz von Programmodulen in einen Speicher. Das Endgerät enthält eine Konfigurationstabelle, in der alle aktuell in dem Speicher geladenen Programmodule verzeichnet sind. Dadurch ist eine Prüfung möglich, ob das Programmodul für ein bestimmtes, aktuell auszuführendes oder zu aktivierendes Leistungsmerkmal geladen ist. Ist dies nicht der Fall, so kann das entsprechende Programmodul vor Ausführung des Leistungsmerkmals geladen werden.

Unter Leistungsmerkmalen werden in diesem Zusammenhang Funktionen und Dienste angesehen, die von dem Endgerät ausgeführt, aktiviert oder abgerufen werden können. Für jedes dieser Leistungsmerkmale ist ein Programmodul vorgesehen, das die jeweilige Funktion ausführt oder den jeweiligen Dienst unterstützt.

Vorteilhaft ist der Basissatz in einem Nutzerprofil abgespeichert. Dazu kann sich beispielsweise ein Nutzer bei Inbetriebnahme des Endgerätes bei dem Server mittels einer Nutzerkennung identifizieren und gegebenenfalls mittels eines Paßwortes oder einer Geheimnummer authentisieren. Nach einer so erfolgten Anmeldung wird das benutzerspezifische Nutzerprofil gelesen und die darin verzeichneten Programmodule in den Speicher des Endgerätes geladen. So können für jeden Benutzer stets die Programmodule geladen werden, die dieser gewöhnlich oder regelmäßig benutzt, was z.B. anhand einer Statistik über den Benutzer ermittelt werden kann oder von dem Benutzer vorgegeben wurde. Dadurch werden stets die Programmodule geladen, deren Benutzung durch den jeweiligen Benutzer mit hoher Wahrscheinlichkeit zu erwarten ist.

Unter Inbetriebnahme ist in diesem Zusammenhang jedes Einschalten des Endgerätes zu verstehen. Ebenso bedeutet ein Netzwechsel eine Inbetriebnahme des Endgerätes in dem neuen Netz, z.B. bei Mobilfunknetzen. Allerdings muß die Software nicht bei jeder Inbetriebnahme in das Endgerät geladen werden, sie kann auch permanent in dem Endgerät gespeichert sein. In diesem Fall wird ein komplettes Neuladen nur bei Netzwechsel oder Netzbetreiberwechsel erforderlich oder wenn eine neue Version der Software zur Verfügung steht (Update).

Anstelle eines zentralen Servers kann die Bereitstellung des Programmpaketes auch als verteilte Anwendung in dem Telekommunikationsnetz ausgeführt sein, beispielsweise so, daß in einem Mobilfunknetz immer ein nächstgelegener Server für das Bereitstellen aktuell benötigter Programmodule zuständig ist.

Ein Blockschaltbild des Telekommunikationsendgerätes TER ist in Figur 2 gezeigt. Das Endgerät TER besitzt einen Prozessor CPU, der das Endgerät steuert, einen Speicher MEM, in den das aus Programmodulen bestehende Steuerprogramm geladen werden kann, eine Ein/Ausgabe-Schniffstelle I/O und einen Festwertspeicher ROM mit einem zum Laden des Programmes vorgesehenen Lademodul. Prozessor CPU, Speicher MEM, Festwertspeicher ROM und Ein/Ausgabe-Schnittstelle I/O sind über einen Bus miteinander verbunden. Die Ein/Ausgabe-Schnittstelle ist mit dem Telekommunikationsnetz verbunden. Bei dem Telekommunikationsnetz kann es sich sowohl um ein leitungsgebundenes Netz (beispielsweise ein ISDN-Netz) als auch um ein Funknetz (beispielsweise ein GSM-Netz) handeln. Das Lademodul ist eine Art Betriebssystem, mit dem eine erste Verbindung mit dem Telekommunikationsnetz hergestellt werden kann, um die erforderlichen Programmodule in den Speicher zu laden.

Bei dem Speicher MEM kann es sich um einen nichtflüchtigen, elektrisch löschbaren Speicher, z.B. ein EEPROM, handeln. Dies hat den Vorteil, daß bei Inbetriebnahme die zuletzt gespeicherten Programmodule erhalten sind. Durch einfachen Versionsvergleich kann festgestellt werden, ob es notwendig ist, eine neue Version der Programmodule aus dem Telekommunikationsnetz zu laden.

Alternativ kann für den Speicher auch ein flüchtiger Speicher, beispielsweise DRAM, eingesetzt werden. Dies kann z.B. für Mobilfunkgeräte, die in Netzen unterschiedlicher Netzbetreiber eingesetzt werden sollen, vorteilhaft sein. Bei Inbetriebnahme ist der Speicher zunächst leer und wird automatisch mit den Programmodulen des Netzbetreibers geladen, in dessen Empfangsbereich sich das Mobilfunkgerät befindet.

Der Speicher MEM des Telekommunikationsendgerätes TER ist in dem Ausführungsbeispiel in der in Figur 3 schematisch gezeigten Weise belegt: In einem ersten Speicherbereich TAB ist die Konfigurationstabelle gespeichert. Sie enthält die Informationen, welche Programmodule in den folgenden Speicherbereichen enthalten sind. In einem zweiten Speicherbereich STD ist der Basissatz an Programmodulen gespeichert. Hierbei handelt es sich vorzugsweise um eine Auswahl an Programmodulen, die für die essentiellen Grundfunktionen des Endgerätes erforderlich sind. In einem dritten Speicherbereich ADD sind zusätzliche Programmodule enthalten, die beispielsweise nachträglich, d.h. erst zum Zeitpunkt, zu dem die entsprechende Funktion oder das entsprechende Leistungsmerkmal ausgeführt oder aufgerufen wurde, geladene Programmodule. Bei dem vierten Speicherbereich FREE handelt es sich um einen freien Speicherbereich. Hier können weitere Programmodule geladen werden. Wenn der freie Speicherbereich erschöpft ist, werden vorzugsweise solche Programmodule aus dem dritten Speicherbereich ADD wieder gelöscht, die aktuell nicht benötigt werden. Durch diese Speicherorganisation kann der Speicher kleiner ausgelegt sein, als es bei einem herkömmlichen Endgerät der Fall wäre.

Die Konfigurationstabelle kann alternativ auch in einem separaten Speicher gespeichert sein. Vorzugsweise enthält die Konfigurationstabelle zu den Programmodulen zusätzlich Konfigurationsparameter, z.B. einen Zeiger auf die Speicherstelle, an der das jeweilige Programmodul gespeichert ist.

Bei dem Telekommunikationsendgerät kann es sich um ein Telefon, ein Mobilfunktelefon, ein Faxgerät, ein Internet-Telefon oder ein ähnliches Gerät zur Ausführung von Telekommunikationsdiensten handeln. Beispiele für Leistungsmerkmale, zu deren Ausführung zusätzliche Programmodule nachgeladen werden, sind Short Message Service, Anrufweiterschaltung, Rufumleitung, Rückruf-bei-Besetzt oder Konferenzschaltung.

Bei einer bevorzugten Ausführungsform sind die Programmodule in einer Skriptsprache geschrieben, beispielsweise in der Sprache Java. Das Endgerät enthält in diesem Fall neben dem Lademodul einen Interpreter für die Skriptsprache. Dadurch wird ermöglicht, daß die Programmodule plattformunabhängig, d.h. unabhängig von Typ und Hersteller des Endgerätes, eingesetzt werden können.

Die Erfindung ermöglicht es einem Netzbetreiber oder einem Dienstanbieter auch, einem bestimmten Benutzer, der sich beispielsweise auf die vorstehend geschilderte Weise angemeldet haben kann, nur die Leistungsmerkmale und Funktionen in Form von entsprechenden Programmodulen zur Verfügung zu stellen, für die der Benutzer einen Nutzungsvertrag abgeschlossen hat. In diesem Fall werden z.B. nur die Programmodule zur Verfügung gestellt, die in dem Nutzerprofil als verfügbar vermerkt sind. Es ist dem Netzbetreiber oder Dienstanbieter auch möglich, pauschal eine Gebühr zu berechnen, wenn ein Programmodul abgerufen wird.

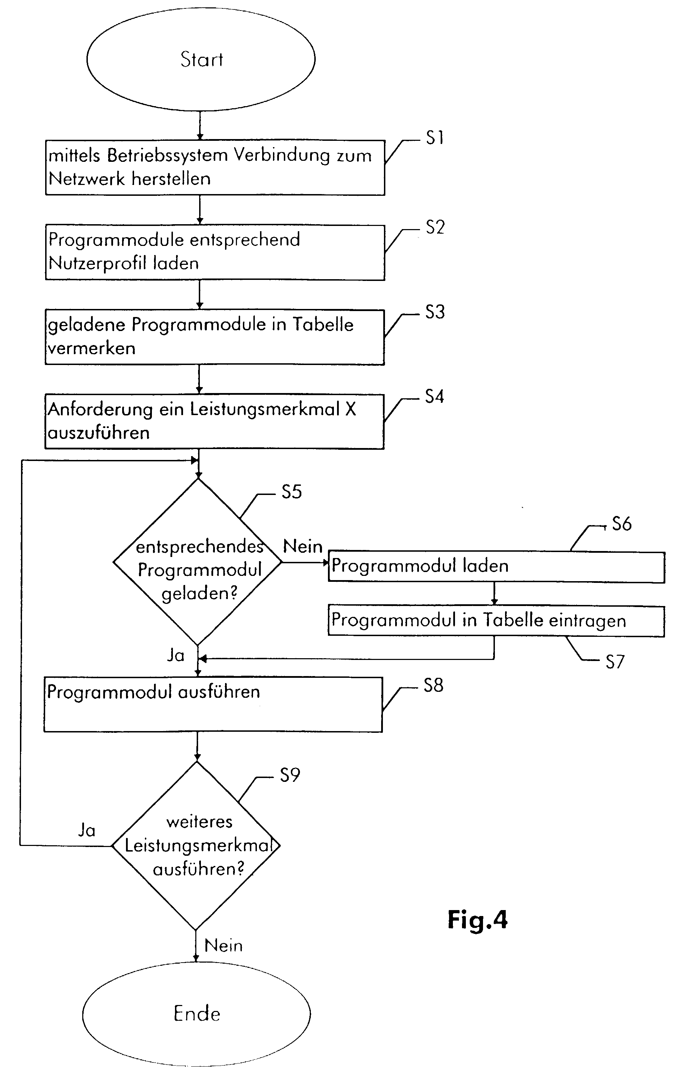

In Figur 4 ist ein Flußdiagramm für das erfindungsgemäße Verfahren des Ausführungsbeispiels dargestellt. Nach Inbetriebnahme des Telekommunikationsendgerätes werden die folgenden Schritte ausgeführt:
- Schritt S1:: Mittels des in dem Festwertspeicher enthaltenen Lademoduls wird eine Verbindung zu dem Telekommunikationsnetz hergestellt.
- Schritt S2:: Das Nutzerprofil wird gelesen und die darin als Basissatz vermerkten Programmodule werden in den Speicher des Telekommunikationsendgerätes geladen.
- Schritt S3:: Die geladenen Programmodule werden in der Konfigurationstabelle des Telekommunikationsendgerätes vermerkt. Damit ist das Telekommunikationsendgerät betriebsbereit.
- Schritt S4:: Nun soll ein Leistungsmerkmal ausgeführt werden. Das auszuführende Leistungsmerkmal ist beispielhaft mit X bezeichnet.
- Schritt S5:: Dazu wird zunächst anhand der Konfigurationstabelle überprüft, ob das zur Ausführung des Leistungsmerkmals X erforderliche Programmodul bereits in dem Speicher enthalten ist. Ist dies der Fall, so wird als nächstes der Schritt S8 ausgeführt (Ausführung des entsprechenden Programmoduls durch den Prozessor).
- Schritt S6:: Wenn das Programmodul für das entsprechende Leistungsmerkmal nicht im Speicher enthalten ist, so wird es nun aus dem Telekommunikationsnetz in den Speicher geladen.
- Schritt S7:: Das neu geladene Programmodul wird nun in die Konfigurationstabelle eingetragen.
- Schritt S8:: Der Prozessor führt das entsprechende Programmodul aus.
- Schritt S9:: Soll eine weiteres Leistungsmerkmal des Telekommunikationsendgerätes ausgeführt werden, so werden die Schritte S5 bis S8 wiederholt. Anderenfalls ist das Verfahren, z.B. durch Außerbetriebnahme des Endgerätes beendet.

Ein erfindungsgemäßer Server besitzt Mittel zum Bereitstellen des Steuerprogrammes in dem Telekommunikationsnetz. Dazu zählen Zugangsmittel zu dem Telekommunikationsnetz, wie eine Schnittstelleneinrichtung und eine Einrichtung zum Erzeugen von Dateneinheiten gemäß der in dem Telekommunikationsnetz eingesetzten Übertragungsprotokolle. Weiter zählen dazu Speichermittel, in denen das Steuerprogramm gespeichert ist und Mittel um auf Abruf eines Endgerätes die entsprechenden Programmodule des Steuerprogrammes einzeln zu dem Endgerät zu übertragen. Weiter ist in dem Server, vorzugsweise für jeden Benutzer, ein Basissatz von Programmodulen definiert, der bei Inbetriebnahme eines Endgerätes, d.h. wenn sich ein bisher nicht angemeldetes Endgerät bei dem Server meldet, an dieses übertragen wird.

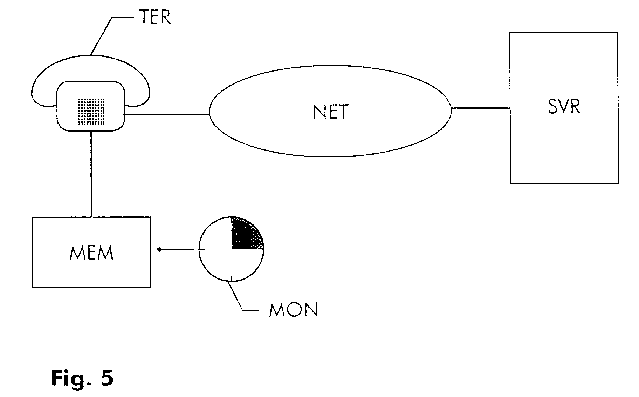

Ein weiteres Ausführungsbeispiel ist die in Figur 5 gezeigte vorteilhafte Weiterbildung eines erfindungsgemäßen Endgerätes. Das Endgerät TER ist an ein Nachrichtennetz NET angeschlossen, welches den zentralen Server SVR enthält. Von dem Server SVR lädt das Endgerät Programmodule seines Steuerprogrammes in seinen Speicher MEM. Das Endgerät besitzt zusätzliche eine Überwachungseinrichtung MON, die zum Überwachen des Programmablaufes der einzelnen Programmodule vorgesehen ist. Die Überwachungseinrichtung stellt fest, wenn ein Programm seit einer vorgegebenen oder vom Benutzer vorgebbaren Zeitspanne nicht mehr ausgeführt wurde und veranlaßt, daß ein solches Programmodul aus dem Speicher entfernt wird. Der betreffende Speicherbereich wird dann wieder freigegeben und der Eintrag des betreffenden Programmoduls wird aus der Konfigurationstabelle gelöscht. Dadurch wird erreicht, daß nur die momentan tatsächlich benötigten Programmodule im Speicher geladen sind, während andere Programmodule, die nur einmal oder nur sporadisch benötigt werden nicht dauerhaft Speicherplatz belegen. Wird ein solches, aus dem Speicher wieder entferntes Programmodul wieder benötigt, so muß es nach dem vorstehen geschilderten Verfahren wieder von dem Server SVR geladen werden.

Die Zeitspanne, nach der ein Programmodul bei Nichtaufruf aus dem Speicher entfernt wird, ist voreingestellt oder vom Benutzer anzugeben. Dabei ist es möglich, für jedes einzelne Programmodul eine eigene Zeitspanne vorzugeben, nach deren Ablauf das Programm bei Nichtaufruf entfernt wird. Der Wert für die Zeitspanne kann beim Laden des jeweiligen Programmoduls in der Konfigurationstabelle vermerkt werden. Somit ist es auch möglich, einem Programmodul den Wert "Unendlich" zuzuweisen, wodurch verhindert wird, daß dieses Programmodul auf die vorstehend geschilderte Weise wieder aus dem Speicher entfernt wird. Sinnvoll ist dies z.B. für ein Leistungsmerkmal, daß nur selten benutzt wird, jedoch trotzdem immer sofort zur Verfügung stehen wie z.B. eine Notruffunktion.

Die Funktionalität der Überwachung kann bei einem prozessorgesteuerten Endgerät ebenfalls vom Prozessor ausgeführt werden.

## Patentansprüche

1. Telekommunikationsendgerät (TER) mit einem Prozessor (CPU) zur Steuerung des Endgerätes, einem Speicher (MEM), der ein zur Steuerung des Endgerätes vorgesehenes Programm enthält, und Mitteln (I/O, ROM) zum Laden des Programmes aus einem Telekommunikationsnetz (NET),
**dadurch gekennzeichnet,**
- daß das Programm aus Programmodulen (STD, ADD) besteht und jedes Programmodul zur Ausführung eines Leistungsmerkmales des Telekommunkationsendgerätes (TER) geeignet ist,
- daß die Programmodule einzeln in den Speicher (MEM) ladbar sind und
- daß das Endgerät (TER) eine Konfigurationstabelle (TAB) enthält, in der jedes aktuell geladene Programmodul vermerkt ist.

2. Telekommunikationsendgerät (TER) nach Anspruch 1, bei dem in der Konfigurationstabelle (TAB) zusätzlich Konfigurationsparameter, die für das jeweilige Programmodul spezifisch sind, gespeichert sind.

3. Telekommunikationsendgerät (TER) nach Anspruch 1, welches von dem Prozessor (CPU) so gesteuert wird, daß ein Programmodul für ein Leistungsmerkmal, welches aktuell nicht geladen ist, bei Auftreten einer Anforderung nach Ausführung des Leistungsmerkmales nachgeladen wird.

4. Telekommunikationsendgerät (TER) nach Anspruch 1, bei dem die Mittel zum Laden des Programmes einen Festwertspeicher (ROM) beinhalten, in dem ein Lademodul zur Ausführung des Ladevorganges gespeichert ist.

5. Telekommunikationsendgerät (TER) nach Anspruch 1, bei dem die Programmodule von zentralen Servern (SVR) des Telekommunikationsnetzes (NET) geladen werden.

6. Telekommunikationsendgerät (TER) nach Anspruch 1, bei dem der Speicher (MEM) ein nichtflüchtiger, elektrisch löschbarer Speicher ist.

7. Telekommunikationsendgerät (TER) nach Anspruch 1, bei dem der Speicher (MEM) ein flüchtiger Speicher ist.

8. Telekommunikationsendgerät (TER) nach Anspruch 1, welches von dem Prozessor (CPU) so gesteuert wird, daß bei Inbetriebnahme des Endgerätes (TER) nur ein Basissatz von Programmodulen (STD) geladen wird.

9. Telekommunikationsendgerät (TER) nach Anspruch 1, bei dem die Programmodule in einer Skriptsprache geschrieben sind.

10. Server (SVR) für ein Telekommunikationsnetz (NET) mit Mitteln zum Bereitstellen eines Programmes zur Steuerung eines Telekommunikationsendgerätes (TER) in dem Telekommunikationsnetz,
**dadurch gekennzeichnet,**
- daß das Programm aus Programmodulen besteht und jedes Programmodul zur Ausführung eines Leistungsmerkmales des Telekommunkationsendgerätes (TER) geeignet ist,
- daß die Programmodule einzeln bei dem Server (SVR) abrufbar sind.

11. Server (SVR) nach Anspruch 10, der bei Inbetriebnahme des Telekommunikationsendgerätes einen Basissatz von Programmodulen (STD) zu dem Telekommunikationsendgerät (TER) überträgt.

12. Server nach Anspruch 11, bei dem der Basissatz in einem benutzerspezifischen Nutzerprofil abgespeichert ist.

13. Verfahren zum Betrieb eines Telekommunikationsendgerätes (TER), das von einem Prozessor (CPU) durch Ausführung eines in einem Speicher (MEM) des Telekommunikationsendgerätes (TER) gespeicherten Programmes gesteuert wird, wobei bei Inbetriebnahme des Telekommunikationsendgerätes (TER) mittels eines Lademoduls (ROM) des Telekommunikationsendgerätes eine Verbindung zu einem Telekommunikationsnetz (NET) hergestellt wird und das Programm aus dem Telekommunikationsnetz in den Speicher (MEM) geladen wird,
**dadurch gekennzeichnet,**
- daß das Programm aus Programmodulen besteht und jedes Programmodul zur Ausführung eines Leistungsmerkmales des Telekommunkationsendgerätes (TER) geeignet ist,
- daß ein Basissatz von Programmodulen (STD) in dem Speicher geladen wird und
- daß in einer Konfigurationstabelle (TAB) vermerkt wird, welche Programmodule in den Speicher (MEM) geladen wurden.

14. Verfahren nach Anspruch 13, bei dem bei Auftreten einer Anforderung nach Ausführung eines Leistungsmerkmales anhand der Konfigurationstabelle (TAB) geprüft wird, ob ein Programmodul für dieses Leistungsmerkmal in dem Speicher (MEM) enthalten ist und dieses Programmodul, wenn es nicht in dem Speicher enthalten ist, aus dem Telekommunikationsnetz (MEM) in den Speicher geladen wird.

15. Telekommunikationsendgerät (TER) nach Anspruch 1 mit einer Überwachungseinrichtung (MON) zum Überwachen des Ablaufes eines Programmmoduls und mit Mitteln zum Entfernen des Programmmoduls aus dem Speicher (MEM), zum Freigeben des betreffenden Speicherbereiches und zum Löschen des betreffenden Eintrages in der Konfigurationstabelle (TAB), wenn das Programmmodul seit einer vorgebbaren Zeitspanne nicht mehr ausgeführt wurde.
